# EUROPEAN PATENT SPECIFICATION

(11) **EP 3 451 354 B1**
(45) Date of publication and mention of the grant of the patent: **26.01.2022**
(21) Application number: 18306145.6
(22) Date of filing: 29.08.2018
(51) Int. Cl.: H01H 1/56, H01H 3/42, H01H 9/26, H02J 9/06, H01H 1/22, H01H 1/50, H01H 3/28

(54) **OVERLAPPING MECHANISM FOR THE NEUTRAL IN AUTOMATIC TRANSFER SWITCH EQUIPMENT (ATSE)**
ÜBERLAPPUNGSMECHANISMUS FÜR DEN NEUTRALLEITER IN AUTOMATISCHEM STROMVERSORGUNGS-UMSCHALTER
MÉCANISME DE CHEVAUCHEMENT POUR LE NEUTRE DANS UN COMMUTATEUR D'ALIMENTATION

(30) Priority: 29.08.2017 CN 201721091783 U
(43) Date of publication of application: 06.03.2019
(73) Proprietor: Schneider Electric Industries SAS, 92500 Rueil-Malmaison (FR)
(72) Inventor: LIU, Zhenzhong, Shanghai 201203 (CN)
(74) Representative: Manitz Finsterwald Patent- und Rechtsanwaltspartnerschaft mbB

(56) References cited:
- EP-A2- 0 339 131

## Description

### TECHNICAL FIELD

The present application relates to a field of automatic transfer switch equipment (ATSE), particularly a neutral overlapping mechanism for the ATSE.

### BACKGROUND

The automatic transfer switch equipment (ATSE) rose in response to the requirements for the continuity of the power supply. With the increasing requirements for the continuity, safety and reliability of power supply, the application of the ATSE is becoming more and more normal. In densely populated public places such as hotels and theaters, interruption of the power supply will cause disorder and even endanger the safety of the guests. Relevant industry standards stipulate that the power distribution system must have emergency power supply. As in the data center, the lack of power supply voltage means the loss of data. The ATSE in combination with an uninterruptible power supply (UPS) is used to ensure continuity of the power supply. However, since there is a temporary disconnection of the neutral line (like other phase lines) during the switching of the power sources, this will cause fluctuations in the voltage of some electric devices and thus cause influence and loss. For example, in the application of uninterruptible power supply data center where ASTE and UPS are combined, the short-term disconnection of the neutral line causes the zero ground voltage of UPS to rise and causes the server to restart, causing serious consequences such as data loss or server damage. Reliable neutral overlapping switching would be of great concern, such as there is a long enough neutral overlapping time during the conversion of the normal power source (replacement power source) to the replacement power source (normal power source) and at the end of the conversion there is a need to reliably and fast cut off the neutral line of the normal power supply (replacement power source).

A simple and reliable neutral overlap mechanism is of great significance for the reliable operation of the ATSE. Therefore, it is necessary to provide a mechanism capable of solving the above problems. The mechanism provided by the present technology is simple to implement and has relatively high reliability.

EP 0 339 131 A2 discloses a mechanism according to the preamble of claim 1, and an electric switch with counter acting electro-dynamic forces which tend to open the switch.

### SUMMARY

A neutral overlapping mechanism for automatic transfer switch equipment (ATSE) is provided by claim 1. Further advantageous embodiments are provided by the dependent claims.

### BRIEF DESCRIPTION OF THE DRAWINGS

The features and advantages of the present application will become more apparent from the following detailed description of specific embodiments of the present application with reference to the attached drawings, and the description and attached drawings are for illustrative purposes only and are not intended to limit the scope of the application, in which:
FIG. 1 is a schematic structural view of a neutral overlapping mechanism for ATSE according to a preferred embodiment of the present application;
FIG. 2 is a schematic diagram showing a state of a neutral overlapping mechanism for ATSE according to a preferred embodiment of the present application when the replacement power source is switched on and the normal power source is switched off;
FIG. 3 to FIG. 6 arc schematic diagrams showing states of a neutral overlapping mechanism for ATSE according to a preferred embodiment of the present application during a process of switching from the replacement power source to the normal power source;
FIG. 7 is a schematic diagram showing a state of a neutral overlapping mechanism for ATSE according to a preferred embodiment of the present invention when the replacement power source is switched off and the normal power source is switched on.

### DETAILED DESCRIPTION

The above and other technical contents, features, and technical effects of the present invention will be apparent from the following detailed description of embodiments. It should be noted that the directional terms mentioned in the specification, such as up, down, left, right, front, back, clockwise, counterclockwise, etc., are only referring to the direction of the drawing, and the directional terms used for illustrative purposes only and are not intended to limit the scope of the invention. The description of the "first" and its variants are only for the purpose of distinguishing the various components and are not intended to limit the scope of the invention. The "first component" can be written as the "second component" without departing from the scope of the present invention.

The working principle of the neutral overlapping mechanism for the automatic transfer switch equipment of the present invention will be described below with reference to the automatic transfer switch equipment shown in the drawings.

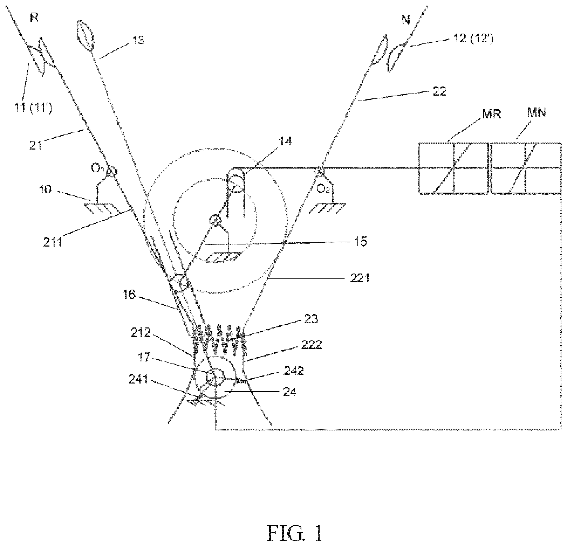

For ease of understanding, all of the figures show the mechanism, phase line pole and neutral line pole superimposed together. As shown in FIG. 1, the mechanism of the automatic transfer switch (e.g., disposed at the uppermost level) includes a frame 10, electromagnets MR and MN, a fork 14, a crank 15, a main shaft driving member 16, and a main shaft 17. The phase line pole of the automatic transfer switch (such as disposed in the intermediate layer) comprises a frame 10, fixed contacts 11 and 12 disposed on the frame, and mobile contacts 13, wherein the mobile contacts are mounted on the main shaft 17 and rotate therewith. The neutral pole of the automatic transfer switch (such as disposed at the bottom layer) includes a frame 10, a fixed contact 11' disposed on the frame (overlapped with the fixed contact 11 in this view), and 12' disposed on the frame (overlapped with the fixed contacts 12 in this view), the neutral contacts 21 and 22 disposed on the frame, the neutral contact spring 23 and the cam member 24. The main shaft 17 extends through the mechanism layer, the phase line pole layer and the neutral line pole layer.

The frame 10 has a central axis, and the fixed contacts 11 electrically connected to the first power source (the replacement power source R illustrated) and the fixed contacts 12 electrically connected to the second power source (the normal power source N illustrated) are respectively disposed on the central axis. Both sides are symmetrically arranged with respect to the central axis, for example as shown.

The crank 15 is rotatably disposed on the frame 10, preferably with its center of rotation on the center axis of the frame 10. Cylindrical pins are provided at each end of the crank 15. The fork 14 has a downwardly open guide portion for guiding a cylindrical pin of the crank 15 to move back and forth along the guide portion.

The main shaft driving member 16 has a guide portion that opens upward as shown, for guiding another cylindrical pin of the crank 15 to move back and forth along the guide portion. The main shaft 17 is rotatably disposed on the frame, and preferably, the center of rotation of the main shaft 17 is located on the center axis of the frame 10. The main shaft driving member 16 is fixedly mounted to the main shaft 17, so that the main shaft 17 can be rotated together with the main shaft driving member 16. Further, a bracket of the mobile contact 13 is fixedly mounted on the main shaft 17, so that the mobile contact 13 rotates therewith as the main shaft 17 rotates.

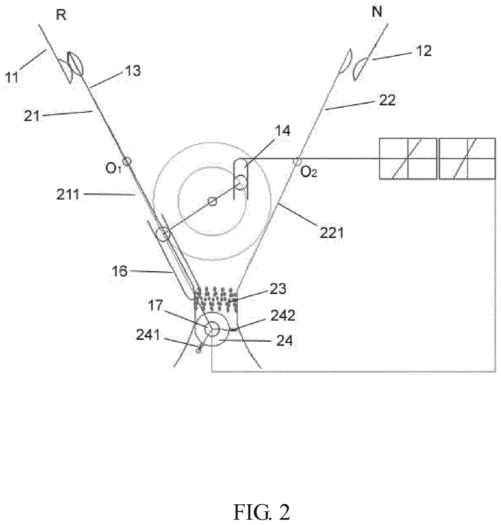

After the electromagnet is energized, the fork 14 is driven to linearly move in a direction from left to right or from right to left, whereby the crank 15 and the main shaft driving member 16 are driven by the cylindrical pin, so that the mobile contact 13 moves between a first power-on position where it is in contact with the fixed contact 11 and a second power-on position where it is in contact with the fixed contact 12. The above-described motion process can be better understood by those skilled in the art by referring to FIGS. 2 to 7 and the following more detailed description.

Referring to Figure 1, the neutral overlapping mechanism for the automatic transfer switch includes neutral mobile contacts 21, 22 on either side of the neutral axis, and the neutral mobile contacts 21, 22 are respectively disposed adjacent the fixed contacts 11', 12' and can be in contact with the fixed contacts 11', 12', respectively. When the neutral contact 21 is in contact with the fixed contact 11', the neutral line of the first power source is electrically connected; when the neutral contact 22 is in contact with the fixed contact 12', the neutral line of the second power source is electrically connected.

The neutral mobile contact 21, 22 includes a first arm 211, 221 and a second arm 212, 222. The first arm 211, 221 is provided with contact ends for contacting the fixed contacts, and the first arm 211, 221 is provided with pivot point O1, O2 spaced apart from the contact ends, pivot point O1, O2 being fixed to the frame, whereby the neutral mobile contact 21, 22 is rotatably disposed on the frame 10 about a pivot point.

The first arm is fixedly, preferably rigidly, connected to the second arm, and the first arm and the second arm are substantially at an angle greater than 90 to facilitate interaction with a cam member as will be described later. In a preferred embodiment of the invention illustrated in the drawings, the second arm is disposed adjacent the cam member and may have a portion of a cambered profile that facilitates steady and smooth operation of the mechanism.

The neutral overlapping mechanism includes an elastic member 23 disposed on the neutral mobile contact for biasing the neutral mobile contact towards its closed position, i.e., forcing the first neutral mobile contact 21 to bias towards a position where it is in contact with the first neutral fixed contact 11' while to bias the second neutral mobile contact 22 to a position where it is in contact with the second neutral mobile contact 12'. The elastic member 23 can be in the form of the illustrated spring. For example, the elastic member 23 may be a tension spring. The elastic member 23 has one end mounted on the second arm 212 of the first neutral mobile contact 21 and the other end mounted on the second arm 222 of the second neutral mobile contact 22.

The drawing shows a preferred embodiment in which the first end of the spring 23 is mounted to the second arm 212 of the neutral mobile contact 21 and the other end is mounted to the second arm 222 of the neutral mobile contact 22. Comparing to other solutions, this arrangement requires only a relatively small tension spring, making the structure of the entire mechanism simple, low cost, and convenient for assembly and maintenance.

The neutral overlapping mechanism further includes a cam member 24 fixedly mounted to the main shaft 17, including a portion protruding from the cam surface which is relatively high as compared with other portions of the cam member, referred to as protrusions 241, 242. The portions 241, 242 are angularly spaced apart. The lower portion of the cam member other than the protrusions may have a circular arc-shaped profile, but such design is not essential. When the cam member 24 is rotated until one of the protrusions comes into contact with the corresponding second arm, the second arm and the first arm are forced to swing about its pivot point in a direction away from the corresponding fixed contact, thereby causing the neutral mobile contact to be separated from the corresponding fixed contact, so that the neutral line of the corresponding power source is electrically disconnected. That is, when one of the protrusions 241, 242 of the cam member 24 is engaged with the corresponding neutral mobile contact, the cam member forces the neutral mobile contact to be separated from its corresponding fixed contact, thereby corresponding neutral line is disconnected; when one of the protrusions 241, 242 of the cam member 24 is disengaged from the corresponding neutral mobile contact, the cam member allows the neutral mobile contact to contact its corresponding fixed contact, so that the corresponding neutral line is electrically connected.

The operation steps of the neutral overlapping mechanism for, for example, the automatic transfer switch will be specifically described below with reference to the drawings.

Fig. 2 shows the state of the neutral overlapping mechanism when the replacement power source R is switched on and the normal power source N is switched off. The mobile contact 13 of the automatic transfer switch is in contact with the fixed contact 11 of the replacement power source R, since the angle between the force lines of the crank 15 and the mobile contact 13 is substantially perpendicular and the contact pressure spring (not shown) acts. The mobile contact 13 is stably maintained at this position in the case where the electromagnet is de-energized. The neutral mobile contact 21 is in contact with the fixed contact 11', and the neutral line of the replacement power source R is switched on. The cam member 24 is now in the first position, and the protrusion 242 is in mating contact with the second arm 222 of the neutral mobile contact 22 such that the neutral mobile contact 22 is separated from the fixed contact 12' and the protrusion 242 is now at its uppermost position. Preferably, the shape and position of the protrusion 24 and the second arm 222 are designed such that when the protrusion 242 is in the upper position thereof, the engagement of the protrusion 242 with the second arm 222 causes the first arm 221 to have the largest swing angle in the shown counterclockwise direction, so that the contact end of the neutral mobile contact 22 and the fixed contact 12' are separated by the largest distance. On the opposite side of the protrusion 242 (left side of the drawing), alternatively, the lower portion of the cam member 24 may be in contact with the contour of the second arm 212 of the neutral mobile contact 21, the other protrusion 241 on this side is not in contact with the second arm 212. The neutral mobile contact 21 stably remains at this position shown in the drawing under the spring force of the spring 23.

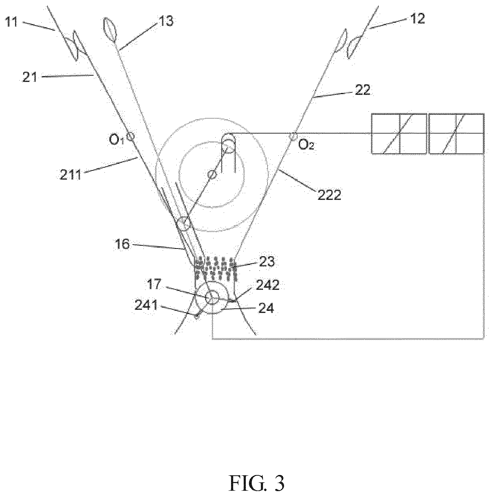

When the electromagnet is energized, the main shaft driving member 16 is driven to rotate in the clockwise direction as shown by the fork 14 and the crank 15 to switch the automatic transfer switch from the replacement power source R to the normal power source N, as shown in FIG. 3. The mobile contact 13 is thus separated from the fixed contact 11, and the replacement power source R is thus electrically switched off, while the main shaft 17 and the cam member 24 mounted thereon also rotate in the clockwise direction together with the main shaft driving member 16. The protrusion 242 of the cam member 24 thus also rotates downward from its uppermost position, so that the second arm 222 and the first arm 221 of the neutral mobile contact 22 rotate in the clockwise as shown about the pivot point O2. The spring 23 then contracts, and the distance between the contact end of the neutral mobile contact 22 and the fixed contact 12' is getting smaller and smaller. On the other hand, the other protrusion 241 is still not in contact with the second arm 212 of the neutral mobile contact 21, thereby allowing the neutral mobile contact 21 to remain in contact with the neutral fixed contact 11', meaning that when the replacement power source R is switched off, the neutral line of the replacement power source R is not electrically disconnected, but is disconnected afterwards (to be described later), thereby ensuring safety during switching of power sources.

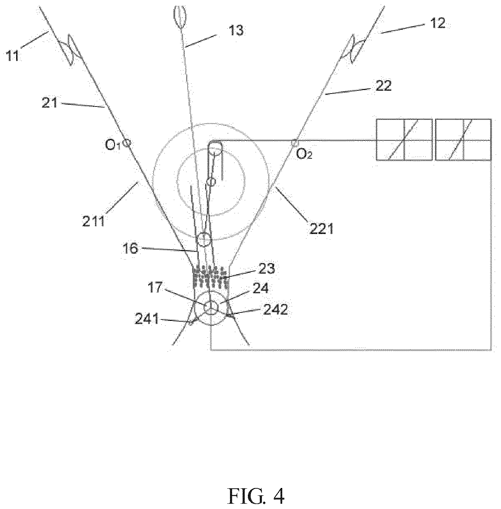

Fig. 4 shows that as the mobile contact 13 and the cam member 24 continue to rotate in the clockwise direction to the third position, the protrusion 242 of the cam member is about to be disengaged from the second arm 222, and the neutral mobile contact 22 begins to come into contact with the fixed contact 12' since it no longer abuts against the protrusion 242, so that the neutral line of the normal power source N is switched on, that is, the neutral line is connected in advance before the mobile contact 13 switching on the normal power source N. On the other hand, since the protrusion 241 on the other side has not yet been rotated into contact with the second arm 212 of the neutral mobile contact 21, the neutral mobile contact 21 remains in contact with the fixed contact 11'.. From this moment on, the neutral line of the replacement power source R and the neutral line of the normal power source N are both switched on, that is, the neutral lines overlap. The neutral overlapping switching avoids the zero line float caused by the short-time disconnection of the neutral line during switching of power sources, and prevents significant operational hazard.

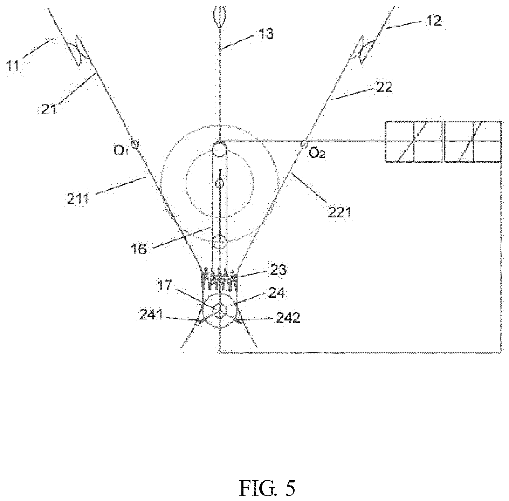

As shown in FIG. 5, the mobile contact 13 of the automatic transfer switch is rotated to the double-separating position shown in the figure, and the protruding portions 241, 242 of the cam member 24 are not in contact with the second arms 212, 222, and the neutral mobile contact 21 is 22 is in contact with the fixed contacts 11', 12', respectively, so that the neutral lines of the normal power source N and the replacement power source R are both electrically connected.

Next, as the mobile contact 13 and the cam member 24 continue to rotate in the clockwise direction, the cam member 24 is rotated to the fourth position (not shown in the drawings), and the protrusion 241 starts to contact with the second arm 212 of the neutral mobile contact 21, forcing the second arm 212 and the first arm 211 to rotate in the clockwise direction about the pivot point O1, thereby the contact end of the neutral mobile contact 21 is separated from the fixed contact 11'. At the same time, the spring 23 is elongated and the spring force helps the neutral mobile contact 22 remain in contact with the fixed contact 12'.

Thus, when the cam member 24 is located between the third position and the fourth position, the cam member 24 allows both the neutral line of the replacement power source R and the line of the normal power source N to remain electrically connected, thereby achieving neutral overlapping switching of the automatic transfer switch equipment.

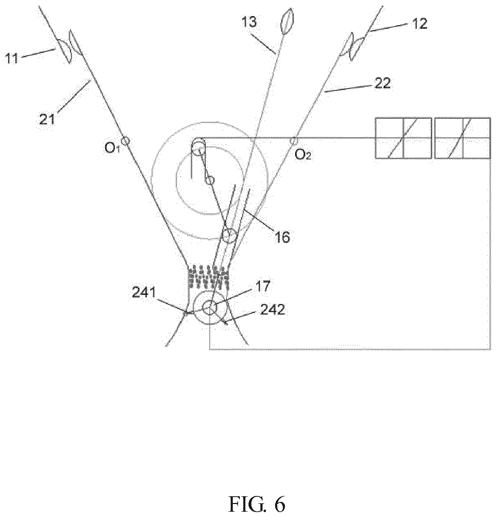

As can be seen from Fig. 6, when the mobile contact 13 is rotated to a position close to the second fixed contact 11, the cam member 24 causes the neutral mobile contact 21 and the fixed contact 11' to be separated by a distance as shown.

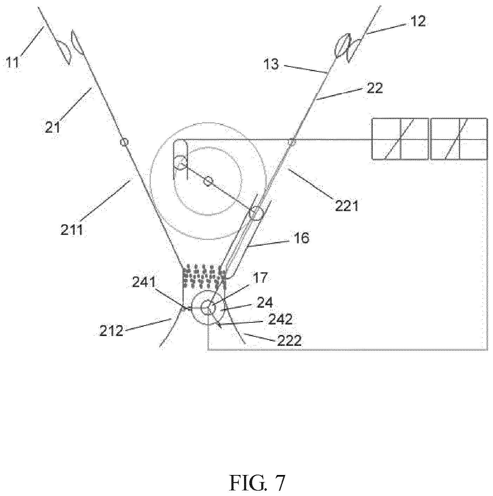

When the mobile contact 13 continues to rotate under the driving of the electromagnet until it is in contact with the fixed contact 12 connected to the normal power source N, as shown in FIG. 7, the normal power source N is switched on at this time, and the neutral line of the normal power source N remains connected. Similar to the case shown in Fig. 2, the force lines of the crank 15 and the mobile contact 13 are substantially perpendicular to each other, so that the mobile contact 13 is stably maintained at this position in the case where the electromagnet is de-energized. The cam member 24 is now in the second position, and the protrusion 241 of the cam member 24 is at its uppermost position, so that the neutral contact 21 and the fixed contact 11' is separated by the largest distance, and the neutral mobile contact 21 is stably kept in the position as shown by the cam member 24 and the spring 23.

As described above, when the automatic transfer switch is switched from one power source to the other power source, the neutral overlapping mechanism can keep one neutral line of the two power sources always electrically connected, and the neutral line of one power source is only disconnected when the other power source is switched on, and the neutral overlapping switching is realized. Such neutral overlapping mechanism is simple and reliable in structure. In addition, the neutral overlapping mechanism contributes to a sufficiently long neutral overlapping time during the switching from the normal power source (replacement power source) to the replacement power source (normal power source), and can cut off the neutral line of the normal power (replacement power) reliably and quickly at the end of the switching.

It will be understood by those skilled in the art that the above embodiments explain the working principle of the neutral overlapping mechanism for the automatic transfer switch equipment proposed by the present invention in an exemplary but non-limiting fashion, and by no means meaning that the neutral overlapping mechanism can only be applied to the automatic transfer switch equipment employed in the embodiment and its drawings, and the neutral line overlapping mechanism according to the present application can of course be applied to other automatic transfer switch equipment without departing from the scope defined by the claims.

## Claims

1. A neutral overlapping mechanism for automatic transfer switch equipment (ATSE) , the ATSE being switchable between a first power source and a second power source and including a frame (10), a main shaft (17) rotatably disposed on the frame, a first fixed contact (11) and a second fixed contact (12) disposed on the frame, and a mobile contact (13) fixedly connected to the main shaft (17) and capable of rotating together with the main shaft, the mobile contact (13) being rotatable between the first fixed contact (11) and the second fixed contact (12), the first power source being switched on when the mobile contact is in contact with the first fixed contact, and the second power source being switched on when the mobile contact is in contact with the second fixed contact, wherein the neutral overlapping mechanism comprises:
neutral fixed contacts disposed on the frame, respectively a first neutral fixed contact (11') and a second neutral fixed contact (12');
neutral mobile contacts rotatably disposed on the frame, respectively a first neutral mobile contact (21) and a second neutral mobile contact (22);
an elastic member (23) disposed on the neutral mobile contacts for biasing the first and the second neutral mobile contact (21, 22), respectively, toward a position in contact with the corresponding neutral fixed contact (11', 12');
a cam member (24) fixedly mounted to the main shaft (17) to rotate with the main shaft and having a first position and a second position, the cam member (24) being in the first position when the mobile contact (13) is in contact with the first fixed contact (11), the cam member (24) being in the second position when the moving contact (13) is in contact with the second fixed contact (12); the cam member (24) is configured to cooperate with the neutral mobile contacts, such that when the cam member (24) is in the first position, the first neutral mobile contact (21) is in contact with the first neutral fixed contact (11'), a neutral line of the first power source is electrically connected, and the second neutral mobile contact (22) is separated from the second neutral fixed contact (12') and a neutral line of the second power source is electrically disconnected; and that when the cam member (24) is in the second position, the first neutral mobile contact (21) is separated from the first neutral fixed contact (11'), the neutral line of the first power source is electrically disconnected, and the second neutral mobile contact (22) is in contact with the second neutral fixed contact (12') and the neutral line of the second power source is electrically connected;
wherein the cam member (24) passes through a third position and a fourth position during rotation from the first position to the second position, and the cam member allows the neutral lines of the first and second power sources to remain electrically connected when the cam member is between the third position and the fourth position for realizing a neutral overlapping switching of the ATSE;
wherein each of the first and second neutral mobile contacts (21, 22) comprises: a first arm (211, 221) which is provided with a contact end for contacting the corresponding neutral fixed contact (11', 12'); and a second arm (212, 222) which is fixedly connected to the first arm and is configured to be at an angle to the first arm;
**characterised in that**: each first arm (211, 221) comprises a pivot point (01, 02) spaced from the contact end and fixed to the frame; and
wherein one end of the elastic member (23) is mounted on the second arm (212) of the first neutral mobile contact (21), the other end of which is mounted on the second arm (222) of the second neutral mobile contact (22).

2. The neutral overlapping mechanism according to the claim 1, wherein when starting rotating from the first position to the second position, the cam member (24) allows the first neutral mobile contact (21) to remain in contact with the first neutral fixed contact (11') and allows the second neutral mobile contact (22) to remain separate from the second neutral fixed contact (12'), thereby enabling the neutral line of the first power source to remain electrically connected and the neutral line of the second power source to remain electrically disconnected; when rotating from the first position to the third position, the cam member (24) allows the first neutral mobile contact (21) and the first neutral fixed contact (11') to remain in contact and forces the second neutral mobile contact (22) to be separated from the second neutral fixed contact (12'), thereby the neutral line of the first power source remaining electrically connected and the neutral line of the second power source beginning to electrically connect; when rotating to the fourth position, the cam member forces the first neutral mobile contact (21) to be separated from the first neutral fixed contact (11') and allows the second neutral mobile contact (22) to remain in contact with the second neutral fixed contact (12'), thereby the neutral of the first power source beginning to disconnect and the neutral line of the second power source remaining electrically connected; when rotating to the second position, the cam member allows the first neutral mobile contact (21) to remain separate from the first neutral fixed contact (11') and allows the second neutral mobile contact (22) to remain in contact with the second neutral fixed contact (12'), thereby the neutral line of the first power source remaining electrically disconnected and the neutral line of the second power source remaining electrically connected.

3. The neutral overlapping mechanism according to the claim 2, wherein the cam member (24) comprises protrusions projecting from the surface of the cam member and being angularly spaced apart, respectively a first protrusion (241) and a second protrusion (242).

4. The neutral overlapping mechanism according to the claim 3, wherein when the cam member (24) is in a position between the first position and the third position, the second protrusion (242) contacts with the second arm (222) of the second neutral mobile contact (22), forcing the second neutral mobile contact (22) to rotate about the second pivot point against the force of a spring, the second neutral mobile contact ( 22) thereby being separated from the second neutral fixed contact (12'); when the cam member is in a position between the third position and the fourth position, the first protrusion (241) and the second protrusion (242) do not contact with the second arm (212) of the first neutral mobile contact or the second arm (222) of the second neutral mobile contact, thereby allowing the first neutral mobile contact (21) and the second neutral mobile contact (22) to be in contact with the first neutral fixed contact (11') and the second neutral fixed contact (12') respectively; when the cam member (24) is in a position between the fourth position and the second position, the first protrusion (241) contacts with the second arm (212) of the first neutral mobile contact (21), forcing the first neutral mobile contact (21) to rotate about the first pivot point against the force of the spring, the first neutral mobile contact (21) thereby being separated from the first neutral fixed contact (11').

5. The neutral overlapping mechanism according to the claim 3, wherein an angle between the second arm and the first arm is greater than 90 degrees.

6. The neutral overlapping mechanism according to the claim 3, wherein the second arm has a cambered profile to cooperate with the protrusion.

7. The neutral overlapping mechanism according to any one of the claims 1 to 6, wherein the elastic member (23) is a spring.

8. An automatic transfer switch equipment comprising the neutral overlapping mechanism for automatic transfer switch equipment according to any one of the claims 1 to 7.

## Patentansprüche

1. Neutralleiter-Überlappungsmechanismus für eine automatische Umschaltvorrichtung (ATSE), wobei die ATSE zwischen einer ersten Stromquelle und einer zweiten Stromquelle umschaltbar ist und einen Rahmen (10), eine drehbar auf dem Rahmen angeordnete Hauptwelle (17), einen ersten Festkontakt (11) und einen zweiten Festkontakt (12), die auf dem Rahmen angeordnet sind, und einen beweglichen Kontakt (13), der fest mit der Hauptwelle (17) verbunden ist und sich zusammen mit der Hauptwelle drehen kann, umfasst, wobei der bewegliche Kontakt (13) zwischen dem ersten Festkontakt (11) und dem zweiten Festkontakt (12) drehbar ist, wobei die erste Stromquelle eingeschaltet ist, wenn der bewegliche Kontakt in Kontakt mit dem ersten Festkontakt steht, und die zweite Stromquelle eingeschaltet ist, wenn der bewegliche Kontakt in Kontakt mit dem zweiten Festkontakt steht, wobei der Neutralleiter-Überlappungsmechanismus umfasst:
auf dem Rahmen angeordnete Neutralleiter-Festkontakte, nämlich einen ersten Neutralleiter-Festkontakt (11') und einen zweiten Neutralleiter-Festkontakt (12');
bewegliche Neutralleiterkontakte, die drehbar auf dem Rahmen angeordnet sind, nämlich einen ersten bewegliche Neutralleiterkontakt (21) und einen zweiten beweglichen Neutralleiterkontakt (22);
ein elastisches Element (23), das auf den beweglichen Neutralleiterkontakten angeordnet ist, um den ersten bzw. den zweiten beweglichen Neutralleiterkontakt (21, 22) in eine Position in Kontakt mit dem entsprechenden Neutralleiter-Festkontakt (11', 12') vorzuspannen;
ein Nockenelement (24), das fest an der Hauptwelle (17) angebracht ist, um sich mit der Hauptwelle zu drehen, und das eine erste Position und eine zweite Position aufweist, wobei sich das Nockenelement (24) in der ersten Position befindet, wenn der bewegliche Kontakt (13) in Kontakt mit dem ersten Festkontakt (11) steht, und sich das Nockenelement (24) in der zweiten Position befindet, wenn der bewegliche Kontakt (13) in Kontakt mit dem zweiten Festkontakt (12) steht; wobei das Nockenelement (24) so konfiguriert ist, dass es mit den beweglichen Neutralleiterkontakten zusammenwirkt, so dass, wenn sich das Nockenelement (24) in der ersten Position befindet, der erste bewegliche Neutralleiterkontakt (21) in Kontakt mit dem ersten Neutralleiter-Festkontakt (11') steht, eine Neutralleiter-Leitung der ersten Stromquelle elektrisch verbunden ist, und der zweite bewegliche Neutralleiterkontakt (22) von dem zweiten Neutralleiter-Festkontakt (12') getrennt ist und eine Neutralleiter-Leitung der zweiten Stromquelle elektrisch getrennt ist; und dass, wenn sich das Nockenelement (24) in der zweiten Position befindet, der erste bewegliche Neutralleiterkontakt (21) von dem ersten Neutralleiter-Festkontakt (11') getrennt ist, die Neutralleiter-Leitung der ersten Stromquelle elektrisch getrennt ist und der zweite bewegliche Neutralleiterkontakt (22) mit dem zweiten Neutralleiter-Festkontakt (12') in Kontakt steht und die Neutralleiter-Leitung der zweiten Stromquelle elektrisch verbunden ist;
wobei das Nockenelement (24) während einer Drehung von der ersten Position in die zweite Position eine dritte Position und eine vierte Position durchläuft, und das Nockenelement es ermöglicht, dass die Neutralleiter-Leitungen der ersten und der zweiten Stromquelle elektrisch verbunden bleiben, wenn sich das Nockenelement zwischen der dritten Position und der vierten Position befindet, um ein Schalten mit überlappenden Neutralleitern der ATSE zu realisieren;
wobei jeder der ersten und zweiten beweglichen Neutralleiterkontakte (21, 22) umfasst: einen ersten Arm (211, 221), der mit einem Kontaktende zum Kontaktieren des entsprechenden Neutralleiter-Festkontakts (11', 12') versehen ist; und einen zweiten Arm (212, 222), der fest mit dem ersten Arm verbunden ist und so konfiguriert ist, dass er in einem Winkel zu dem ersten Arm steht; **dadurch gekennzeichnet, dass**: jeder erste Arm (211, 221) einen Drehpunkt (O1, O2) umfasst, der von dem Kontaktende beabstandet und an dem Rahmen befestigt ist, und
wobei ein Ende des elastischen Elements (23) an dem zweiten Arm (212) des ersten beweglichen Neutralleiterkontakts (21) montiert ist, und sein anderes Ende an dem zweiten Arm (222) des zweiten beweglichen Neutralleiterkontakts (22) montiert ist.

2. Neutralleiter-Überlappungsmechanismus nach Anspruch 1, wobei das Nockenelement (24) beim Beginn des Drehens von der ersten Position in die zweite Position dem ersten beweglichen Neutralleiterkontakt (21) ermöglicht, in Kontakt mit dem ersten Neutralleiter-Festkontakt (11') zu bleiben, und dem zweiten beweglichen Neutralleiterkontakt (22) ermöglicht, von dem zweiten Neutralleiter-Festkontakt (12') getrennt zu bleiben, wodurch ermöglicht wird, dass die Neutralleiter-Leitung der ersten Stromquelle elektrisch verbunden bleibt und die Neutralleiter-Leitung der zweiten Stromquelle elektrisch getrennt bleibt; wenn sich das Nockenelement (24) von der ersten Position in die dritte Position dreht, es das Nockenelement (24) ermöglicht, dass der erste bewegliche Neutralleiterkontakt (21) und der erste Neutralleiter-Festkontakt (11') in Kontakt bleiben, und den zweiten beweglichen Neutralleiterkontakt (22) zwingt, sich von dem zweiten Neutralleiter-Festkontakt (12') zu trennen, wodurch die Neutralleiter-Leitung der ersten Stromquelle elektrisch verbunden bleibt und die Neutralleiter-Leitung der zweiten Stromquelle beginnt, sich elektrisch zu verbinden; wobei das Nockenelement beim Drehen in die vierte Position den ersten beweglichen Neutralleiterkontakt (21) zwingt, sich von dem ersten Neutralleiter-Festkontakt (11') zu trennen, und es dem zweiten beweglichen Neutralleiterkontakt (22) ermöglicht, in Kontakt mit dem zweiten Neutralleiter-Festkontakt (12') zu bleiben, wodurch der Neutralleiter der ersten Stromquelle beginnt, sich zu trennen, und die Neutralleiter-Leitung der zweiten Stromquelle elektrisch verbunden bleibt; wenn sich das Nockenelement in die zweite Position dreht, das Nockenelement ermöglicht, dass der erste bewegliche Neutralleiterkontakt (21) von dem ersten Neutralleiter-Festkontakt (11') getrennt bleibt, und dem zweiten beweglichen Neutralleiterkontakt (22) ermöglicht, mit dem zweiten Neutralleiter-Festkontakt (12') in Kontakt zu bleiben, wodurch die Neutralleiter-Leitung der ersten Stromquelle elektrisch getrennt bleibt und die Neutralleiter-Leitung der zweiten Stromquelle elektrisch verbunden bleibt.

3. Neutralleiter-Überlappungsmechanismus nach Anspruch 2, wobei das Nockenelement (24) Vorsprünge aufweist, die von der Oberfläche des Nockenelements vorstehen und um einen Winkel voneinander beabstandet sind, und zwar einen ersten Vorsprung (241) und einen zweiten Vorsprung (242).

4. Neutralleiter-Überlappungsmechanismus nach Anspruch 3, wobei, wenn sich das Nockenelement (24) in einer Position zwischen der ersten Position und der dritten Position befindet, der zweite Vorsprung (242) den zweiten Arm (222) des zweiten beweglichen Neutralleiterkontakts (22) kontaktiert, wodurch der zweite bewegliche Neutralleiterkontakt (22) gezwungen wird, sich gegen die Kraft einer Feder um den zweiten Drehpunkt zu drehen, wodurch der zweite bewegliche Neutralleiterkontakt (22) von dem zweiten Neutralleiter-Festkontakt (12') getrennt wird; wenn sich das Nockenelement in einer Position zwischen der dritten Position und der vierten Position befindet, der erste Vorsprung (241) und der zweite Vorsprung (242) den zweiten Arm (212) des ersten beweglichen Neutralleiterkontakts oder den zweiten Arm (222) des zweiten beweglichen Neutralleiterkontakts nicht kontaktieren, wodurch ermöglicht wird, dass der erste bewegliche Neutralleiterkontakt (21) und der zweite bewegliche Neutralleiterkontakt (22) in Kontakt mit dem ersten Neutralleiter-Festkontakt (11') bzw. dem zweiten Neutralleiter-Festkontakt (12') stehen; wenn sich das Nockenelement (24) in einer Position zwischen der vierten Position und der zweiten Position befindet, der erste Vorsprung (241) den zweiten Arm (212) des ersten beweglichen Neutralleiterkontakts (21) kontaktiert, wodurch der erste bewegliche Neutralleiterkontakt (21) gezwungen wird, sich gegen die Kraft der Feder um den ersten Drehpunkt zu drehen, wodurch der erste bewegliche Neutralleiterkontakt (21) von dem ersten Neutralleiter-Festkontakt (11') getrennt wird.

5. Neutralleiter-Überlappungsmechanismus nach Anspruch 3, wobei ein Winkel zwischen dem zweiten Arm und dem ersten Arm größer als 90 Grad ist.

6. Neutralleiter-Überlappungsmechanismus nach Anspruch 3, wobei der zweite Arm ein gewölbtes Profil aufweist, um mit dem Vorsprung zusammenzuwirken.

7. Neutralleiter-Überlappungsmechanismus nach einem der Ansprüche 1 bis 6, wobei das elastische Element (23) eine Feder ist.

8. Automatische Umschaltvorrichtung mit dem Neutralleiter-Überlappungsmechanismus für automatische Umschaltvorrichtungen nach einem der Ansprüche 1 bis 7.

## Revendications

1. Mécanisme de recouvrement des neutres pour un équipement de commutation de transfert automatique (ATSE), l'ATSE pouvant être commuté entre une première source d'alimentation et une deuxième source d'alimentation et incluant un cadre (10), un arbre principal (17) disposé de manière rotative sur le cadre, un premier contact fixe (11) et un deuxième contact fixe (12) disposés sur le cadre, et un contact mobile (13) relié de manière fixe à l'arbre principal (17) et capable de tourner avec l'arbre principal, le contact mobile (13) pouvant tourner entre le premier contact fixe (11) et le deuxième contact fixe (12), la première source d'alimentation étant activée lorsque le contact mobile est en contact avec le premier contact fixe et la deuxième source d'alimentation étant activée lorsque le contact mobile est en contact avec le deuxième contact fixe, dans lequel le mécanisme de recouvrement des neutres comprend :
des contacts fixes de neutre disposés sur le cadre, respectivement un premier contact fixe de neutre (11') et un deuxième contact fixe de neutre (12') ;
des contacts mobiles de neutre disposés de manière rotative sur le cadre, respectivement un premier contact mobile de neutre (21) et un deuxième contact mobile de neutre (22) ;
un élément élastique (23) disposé sur les contacts mobiles de neutre pour solliciter respectivement le premier et le deuxième contact mobile de neutre (21, 22) vers une position en contact avec le contact fixe de neutre correspondant (11', 12') ;
un élément formant came (24) monté de manière fixe sur l'arbre principal (17) pour tourner avec l'arbre principal et ayant une première position et une deuxième position, l'élément formant came (24) étant dans la première position lorsque le contact mobile (13) est en contact avec le premier contact fixe (11), l'élément formant came (24) étant dans la deuxième position lorsque le contact mobile (13) est en contact avec le deuxième contact fixe (12) ; l'élément formant came (24) est configuré pour coopérer avec les contacts mobiles de neutre, de sorte que lorsque l'élément formant came (24) est dans la première position, le premier contact mobile de neutre (21) est en contact avec le premier contact fixe de neutre (11'), une ligne de neutre de la première source d'alimentation est électriquement connectée, et le deuxième contact mobile de neutre (22) est séparé du deuxième contact fixe de neutre (12') et une ligne de neutre de la deuxième source d'alimentation est électriquement déconnectée ; et que, lorsque l'élément formant came (24) est dans la deuxième position, le premier contact mobile de neutre (21) est séparé du premier contact fixe de neutre (11'), la ligne de neutre de la première source d'alimentation est déconnectée électriquement, et le deuxième contact mobile de neutre (22) est en contact avec le deuxième contact fixe de neutre (12') et la ligne de neutre de la deuxième source d'alimentation est connectée électriquement ;
dans lequel l'élément formant came (24) passe par une troisième position et une quatrième position pendant la rotation de la première position à la deuxième position, et l'élément formant came permet aux lignes de neutre des première et deuxième sources d'alimentation de rester électriquement connectées lorsque l'élément formant came est entre la troisième position et la quatrième position pour réaliser une commutation avec recouvrement des neutres de l'ATSE ;
dans lequel chacun des premier et deuxième contacts mobiles de neutre (21, 22) comprend : un premier bras (211, 221) qui est muni d'une extrémité de contact pour entrer en contact avec le contact fixe de neutre correspondant (11', 12') ; et un deuxième bras (212, 222) qui est relié de manière fixe au premier bras et est configuré pour former un angle avec le premier bras ;
**caractérisé en ce que** :
chaque premier bras (211, 221) comprend un point de pivotement (O1, O2) espacé de l'extrémité de contact et fixé au cadre ; et
dans lequel une extrémité de l'élément élastique (23) est montée sur le deuxième bras (212) du premier contact mobile de neutre (21), dont l'autre extrémité est montée sur le deuxième bras (222) du deuxième contact mobile de neutre (22).

2. Mécanisme de recouvrement des neutres selon la revendication 1, dans lequel, lors du démarrage de la rotation de la première position à la deuxième position, l'élément formant came (24) permet au premier contact mobile de neutre (21) de rester en contact avec le premier contact fixe de neutre (11') et permet au deuxième contact mobile de neutre (22) de rester séparé du deuxième contact fixe de neutre (12'), permettant ainsi à la ligne de neutre de la première source d'alimentation de rester électriquement connectée et à la ligne de neutre de la deuxième source d'alimentation de rester électriquement déconnectée ; lors de la rotation de la première position à la troisième position, l'élément formant came (24) permet au premier contact mobile de neutre (21) et au premier contact fixe de neutre (11') de rester en contact et force le deuxième contact mobile de neutre (22) à être séparé du deuxième contact fixe de neutre (12'), de sorte que la ligne de neutre de la première source d'alimentation reste électriquement connectée et que la ligne de neutre de la deuxième source d'alimentation commence à être connectée électriquement ; lors de sa rotation vers la quatrième position, l'élément formant came force le premier contact mobile de neutre (21) à être séparé du premier contact fixe de neutre (11') et permet au deuxième contact mobile de neutre (22) de rester en contact avec le deuxième contact fixe de neutre (12'), de sorte que le neutre de la première source d'alimentation commence à être déconnecté et que la ligne de neutre de la deuxième source d'alimentation reste connectée électriquement ; lors de sa rotation vers la deuxième position, l'élément formant came permet au premier contact mobile de neutre (21) de rester séparé du premier contact fixe de neutre (11') et permet au deuxième contact mobile de neutre (22) de rester en contact avec le deuxième contact fixe de neutre (12'), de sorte que la ligne de neutre de la première source d'alimentation reste déconnectée électriquement et que la ligne de neutre de la deuxième source d'alimentation reste connectée électriquement.

3. Mécanisme de recouvrement des neutres selon la revendication 2, dans lequel l'élément formant came (24) comprend des saillies qui font saillie de la surface de l'élément formant came et sont espacées angulairement, respectivement une première saillie (241) et une deuxième saillie (242).

4. Mécanisme de recouvrement des neutres selon la revendication 3, dans lequel lorsque l'élément formant came (24) est dans une position entre la première position et la troisième position, la deuxième saillie (242) entre en contact avec le deuxième bras (222) du deuxième contact mobile de neutre (22), forçant le deuxième contact mobile de neutre (22) à tourner autour du deuxième point de pivotement contre la force d'un ressort, le deuxième contact mobile de neutre (22) étant ainsi séparé du deuxième contact fixe de neutre (12') ; lorsque l'élément formant came est dans une position entre la troisième position et la quatrième position, la première saillie (241) et la deuxième saillie (242) ne sont pas en contact avec le deuxième bras (212) du premier contact mobile de neutre ou le deuxième bras (222) du deuxième contact mobile de neutre, permettant ainsi au premier contact mobile de neutre (21) et au deuxième contact mobile de neutre (22) d'être en contact avec le premier contact fixe de neutre (11') et le deuxième contact fixe de neutre (12'), respectivement ; lorsque l'élément formant came (24) est dans une position entre la quatrième position et la deuxième position, la première saillie (241) entre en contact avec le deuxième bras (212) du premier contact mobile de neutre (21), forçant le premier contact mobile de neutre (21) à tourner autour du premier point de pivotement contre la force du ressort, le premier contact mobile de neutre (21) étant ainsi séparé du premier contact fixe de neutre (11').

5. Mécanisme de recouvrement des neutres selon la revendication 3, dans lequel un angle entre le deuxième bras et le premier bras est supérieur à 90 degrés.

6. Mécanisme de recouvrement des neutres selon la revendication 3, dans lequel le deuxième bras présente un profil cambré pour coopérer avec la saillie.

7. Mécanisme de recouvrement des neutres selon l'une quelconque des revendications 1 à 6, dans lequel l'élément élastique (23) est un ressort.

8. Équipement de commutation de transfert automatique comprenant le mécanisme de recouvrement des neutres pour un équipement de commutation de transfert automatique selon l'une quelconque des revendications 1 à 7.
